## Europäisches Patentamt
## European Patent Office
## Office européen des brevets

(19)

(11) Veröffentlichungsnummer: **0 047 263**
**B1**

(12) **EUROPÄISCHE PATENTSCHRIFT**

(45) Veröffentlichungstag der Patentschrift:
04.09.85

(51) Int. Cl.⁴: **B 67 C 1/047,** B 65 G 15/14

(21) Anmeldenummer: 81900525.7

(22) Anmeldetag: **04.03.81**

(86) Internationale Anmeldenummer:
**PCT/CH 81/00028**

(87) Internationale Veröffentlichungsnummer:
**WO 81/02567 (17.09.81** Gazette **81/22)**

(54) **EINRICHTUNG ZUM ÜBERKOPF-BEHANDELN VON FLASCHEN U. DGL.**

(30) Priorität: **04.03.80 CH 1698/80**

(43) Veröffentlichungstag der Anmeldung:
**17.03.82 Patentblatt 82/11**

(45) Bekanntmachung des Hinweises auf die Patenterteilung:
**04.09.85 Patentblatt 85/36**

(84) Benannte Vertragsstaaten:
**FR**

(56) Entgegenhaltungen:
**US - A - 3 556 487**

(73) Patentinhaber: **EMPAC AG, Sagenbachstrasse 6, CH-8833 Samstagern (CH)**

(72) Erfinder: **RIEDERER, Hans Gian, Im Loretscher, CH-7304 Maienfeld (CH)**

(74) Vertreter: **Petschner, Goetz, Patentanwaltsbüro G. Petschner Seidengasse 18, CH-8001 Zürich (CH)**

## Beschreibung

Die vorliegende Erfindung betrifft eine Einrichtung zum Überkopf-Ausspülen (rinsen) von Flaschen u. dgl., mit einem kontinuierlich zwischen einer Einlaufstelle und einer Auslaufstelle umlaufenden Transportsystem zur klemmenden Mitnahme der Flaschen u. dgl. zu deren Überkopf-Vorbeiführung an einer Sprühvorrichtung für Wasser u. dgl., wobei das Transportsystem zwei synchron umlaufende Endlosketten umfasst, von welchen benachbarte, sich richtungsgleich bewegende Trums parallele Klemmbacken mit einstellbarem Abstand bilden und sich der durch die Endlosketten gebildete Transportweg nahe der Ein- bzw. Auslaufstelle wenigstens angenähert horizontal erstreckt. Eine solche Einrichtung ist aus der US-A-3 556 847 schon bekannt.

Der durch die US-A-3 556 847 bekannt gewordene RINSER wurde im Hinblick darauf geschaffen, bei sehr kompakten Ausmassen eine Reinigung in mehreren Stufen zu ermöglichen. Hiefür wurde zunächst ein durch Endlosketten gebildeter Transportweg vorgesehen, welcher der Form einer querliegenden Acht (8) folgt. Durch das Nebeneinanderlegen solcher Teilabschnitte wurde ein relativ langer Transportweg geschaffen, welcher eine stufenweise Reinigung (Aussprühung) erlaubt. Wie bereits ausgeführt, ist dadurch ein hochkompliziertes Gebilde entstanden mit u.a. einem grossen technischen Aufwand für die Verstellung der lichten Weite zwischen den Transporttrums der beiden, den Transportweg bildenden Endlosketten. Zudem ist hier zwangsläufig Ein- und Auslaufstelle lagefixiert und zudem nicht vorgesehen, die Sprühvorrichtung(en) verstellbar zu machen. Weiter ist bei dieser Anordnung eine Eintaktung der Behältnisse mittels einer Einlaufschnecke vorgesehen. Auch hierfür ergibt sich ein sehr spezifischer Aufwand. Weiter ist bei der Anordnung gemäss der genannten Entgegenhaltung von ganz erheblichem Nachteil, dass die Achterform des Transportweges die Abtropfstrecke erheblich beschränkt, wobei eine vollständige Überkopflage der Behältnisse, die für ein ausreichendes Abtropfen unerlässlich ist, tatsächlich nur jeweils am oberen bzw. unteren Kulminationspunkt der Wendestrecken besteht.

Es ist nun Aufgabe der Erfindung, einen derartigen Rinser zu schaffen, der sich durch eine sehr einfache Konzeption auszeichnet; der ohne weiteres in bestehende Fabrikationsstrassen eingefügt werden kann; dessen Einlaufstelle und Auslaufstelle inbesondere bezüglich der Transportebenen, die durchaus unterschiedlich sein können, und bezüglich allfälliger seitlicher Versetzungen der Zu- und Wegführbänder der Fabrikationsstrassen eingerichtet werden können; dessen Abtropfstrecke praktisch beliebig lang gestaltet werden kann; und bei dem die Sprühvorrichtung jedem Formatwechsel anpassbar ist.

Diese Aufgabe löst die vorliegende Erfindung dadurch,

dass die nahe der Einlaufstelle bzw. Auslaufstelle befindlichen vertikalen Wendebahnen des durch die Endlosketten gebildeten Transportweges durch eine sich horizontal erstreckende Rückführungsstrecke miteinander verbunden sind;

dass sowohl die Auslaufstelle als auch die Einlaufstelle für die Flaschen u. dgl. durch die Umkehrpunkte der beiden Endlosketten gebildet werden;

dass die Einlaufstelle und die Auslaufstelle des durch die Endlosketten gebildeten Transportsystems bezüglich des oberen oder unteren Transportweges in einer horizontalen Ebene oder in unterschiedlichen horizontalen Ebenen liegen;

dass die Einlaufstelle und die Auslaufstelle des durch die Endlosketten gebildeten Transportweges in einer gemeinsamen Vertikalebene liegen oder relativ zueinander seitlich versetzt sind;

dass die Sprühvorrichtung an den Wendebahnen des durch die Endlosketten gebildeten Transportsystems innenseitig oder aussenseitig wirksam und der Abstand zwischen der Sprühvorrichtung und der betreffenden Wendebahn verstellbar ist; und

dass für ein Verschieben der Einlaufstelle seitlich relativ zur Auslaufstelle die Abstützmittel für die beiden Endlosketten an deren Ein- bzw. Auslaufstelle horizontal verschiebbar auf Querstreben aufsitzen.

Beispielsweise Ausführungsformen des Erfindungsgegenstandes werden nachfolgend anhand der Zeichnung näher erläutert. Es zeigen:

Fig. 1 in schematischer Darstellung in Seitenansicht eine erste Ausführungsform der erfindungsgemässen Einrichtung;

Fig. 2 die Anordnung gemäss Fig. 1 in Draufsicht;

Fig. 3 in ausschnittweiser Draufsicht eine zweite Ausführungsform der erfindungsgemässen Einrichtung; und

Fig. 4 in schematischer, ausschnittweiser Darstellung eine weitere Ausführungsform der erfindungsgemässen Einrichtung.

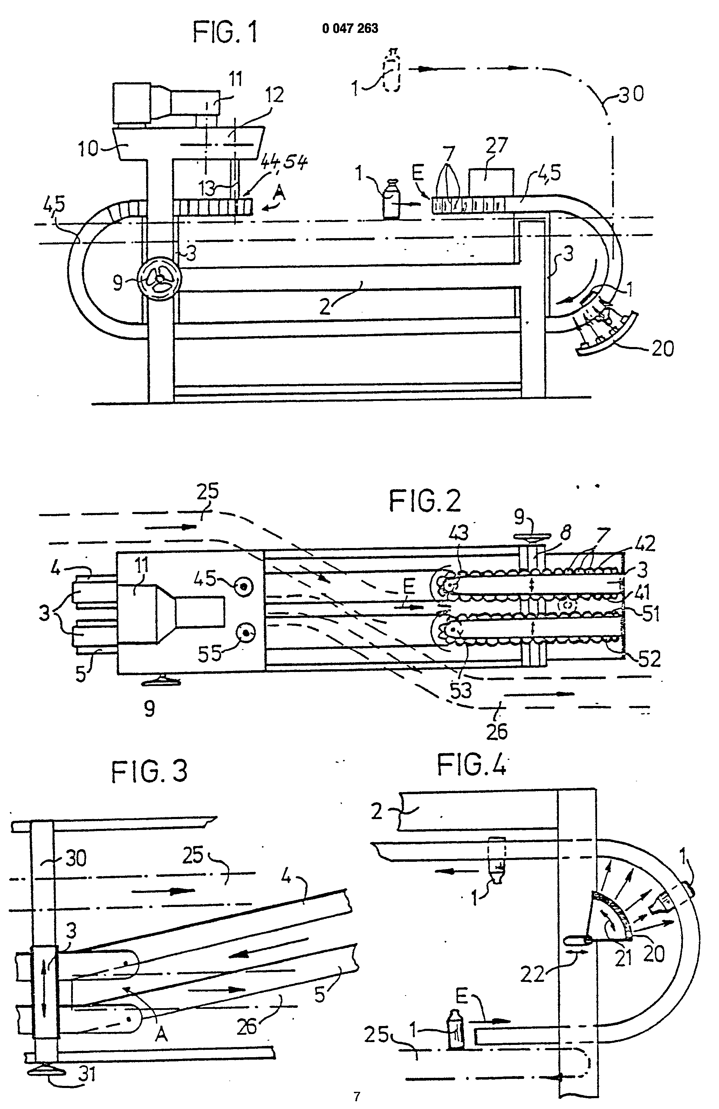

Gemäss den Fig. 1 und 2 umfasst die Einrichtung zum Überkopf-Behandeln von Flaschen 1 einen Maschinenrahmen 2, der zweckmässig in hier nicht näher gezeigter Weise von Gehäuseblechen umgeben wird, um die Umgebung vom verwendeten Arbeitsmedium frei zu halten und um dem Unfallschutz zu genügen.

Dieser Maschinenrahmen 2 trägt über Abstützmittel 3 ein Transportsystem, das hier zwei, in einer Vertikalebene synchron umlaufende Endlosketten 4 und 5 umfasst. Jede dieser Endlosketten weist hierbei ein sogenanntes Transporttrum 41 bzw. 51 sowie ein sogenanntes Rücklauftrum 42 bzw. 52 auf. Wie insbesondere aus Fig. 2 erkennbar, bewegen sich dabei die Transporttrums 41 und 51 richtungsgleich und bilden dabei parallele Klemmbacken. Ferner bilden die Umkehrpunkte 43, 53 bzw. 44, 54 der beiden Endlosketten 4 und 5 die Einlaufstelle E bzw. die Auslaufstelle A für die Flaschen 1.

Wie Fig. 2 ferner erkennen lässt, tragen die Endlosketten 4 und 5 klemmbackenseitig elastische Klemmelemente 7, etwa aus Gummischlauchabschnitten oder dgl., was gestattet, verschiedene Formen von zu behandelnden Gefässen 1 sicher aufzunehmen und klemmend zu halten.

Grössere Unterschiede in den äusseren Abmessungen lassen sich ferner durch Veränderungen der lichten Weite zwischen den beiden Endlosketten 4 und 5 bzw. zwischen deren Transporttrums 41 und 51 erwirken. Hierfür umfassen die Abstützmittel 3 querlaufende Gewindespindeln 8, mittels welchen sich über geeignete Betätigungsmittel, beispielsweise ein Handrad 9, die lichte Weite durch Verstellung der Endlosketten 4 und 5 bzw. deren Abstützmittel 3 relativ zueinander regulieren lässt.

Für den Antrieb der beiden gegensinnig laufenden Endlosketten 4 und 5 ist hier auf einer Konsole 10 am Maschinenrahmen 2 ein Motor 11 mit einem zweckmässig regelbaren Getriebe 12 montiert, wobei das Getriebe 12 zwei gegensinnig umlaufende Wellen 13 umfasst, die jeweils ein Kettenrad 45 bzw. 55 antreiben. Dieser Antrieb ist hier an der Auslaufstelle A angeordnet.

Natürlich kann dieser Antrieb auch an der Einlaufstelle E vorgesehen sein und gegebenenfalls auch innerhalb des Maschinenrahmens 2 liegen.

Wie die Fig. 1 und 2 nun deutlich zeigen, liegen hier die Einlaufstelle E und die Auslaufstelle A in einer gleichen Ebene mit dem oberen Teil des Transportweges. Hierbei wird das Flaschengut über ein winklig versetztes Zuführband 25 der Einlaufstelle E zugeführt und über ein ebenfalls winklig versetztes Wegführband 26 von der Auslaufstelle A weggeführt. Das von den Endlosketten 45 aufgenommene Flaschengut folgt dabei dem von den Endlosketten 4, 5 gebildeten Transportweg über äussere Wendebahnen, wobei hier an der Wendebahn nahe der Einlaufstelle E eine Behandlungsvorrichtung 20 angeordnet ist. Diese Behandlungsvorrichtung 20 kann Luft- und/oder Wasser-Düsen umfassen, durch welche das Innere der Flaschen 1 gereinigt wird. Zweckmässig wird dabei die Anordnung so getroffen, dass sich, entsprechend der verwendeten Grösse der Flaschenmittel, der Abstand zwischen der Behandlungsvorrichtung 20 und dem von den Endlosketten 4 und 5 gebildeten Transportweg verstellen lässt. Entlang der unteren Rückführungsstrecke, auf welcher die Flaschen 1 weiter in Überkopfstellung sind, können weitere Behandlungsvorrichtungen angeordnet sein.

Ferner ist es zweckmässig, sowohl an der Einlaufstelle als auch an der Auslaufstelle nicht näher gezeigte Stau-Kontrollschalter vorzusehen. Weiter ist es sinnvoll, wenigstens nahe der Eingangsstelle E eine Flaschenkontrolleinrichtung 27 vorzusehen.

Diese vorbeschriebene Einrichtung zeichnet sich nun insbesondere durch eine einfache Rahmenkonstruktion aus, bei der zudem jeder Kontakt der Behältermittel mit den Metallteilen der Einrichtung vermieden werden kann, indem die Flaschen u. dgl. direkt vom Zuführband zwischen die Klemmelemente 7 einlaufen bzw. von diesen weg auf das Wegführband gelangen können. Hierbei lässt sich ein besonders geräuscharmer Betrieb erzielen. Zudem kann aufgrund der Ausbildung des Transportsystems mit den beiden getrennten Endlosketten direkt vom Zuführband bzw. zum Wegführband unter Verzicht auf Eintaktschnecken, Sternräder u. dgl. gearbeitet werden. Ferner gestattet die Relativverstellung zwischen den beiden Endlosketten eine verzögerungsfreie Einstellung der Einrichtung bei einem Formatwechsel. Zudem lässt sich die vorbeschriebene Einrichtung ohne Schwierigkeiten leicht in das bestehende Förderbandsystem des Kunden einbauen, wobei bereits vorhandene Ein-und Auslaufkontrollmittel für die Gläser u. dgl. herangezogen werden können, um die Abschaltsignale für die Einrichtung und die Behandlungsvorrichtungen bei einem Warenstau zu erzeugen.

Weiter lässt sich die vorbeschriebene Einrichtung für weitere Anpassungen an bestehende Kundentransportsysteme leicht modifizieren, indem die Einlaufstelle E und die Auslaufstelle A bezüglich des oberen oder unteren Transportweges in gleiche oder unterschiedliche Ebenen verlegt werden können.

Bei der Ausführungsform gemäss Fig. 1 ist durch eine strichpunktierte Linie 30 die Anordnung der Einlaufstelle E wahlweise in eine höhere Ebene angedeutet. Dies würde beispielsweise eine geradlinige Anordnung des Zuführbandes gestatten.

Bei der Ausführungsform gemäss Fig. 4 hingegen befindet sich die Einlaufstelle E in der Ebene des unteren Transportweges. Diese ausschnittweise Darstellung, welche die Auslaufstelle A nicht zeigt, macht deutlich, dass hier die Behandlungsvorrichtung 20 innerhalb der Wendebahn des Transportweges für die Flaschen 1 angeordnet ist.

Die Pfeile 21 und 22 deuten dabei die Verstellbarkeit der Behandlungsvorrichtung 20 an.

Eine weitere Systemanpassung wird möglich, wenn sich gemäss Fig. 3 die Einlaufstelle seitlich relativ zur Auslaufstelle verschieben lässt. Hierfür können die Abstützmittel 3 für die Endlosketten 4, 5 an der Einlaufstelle (nicht gezeigt) bzw. der Auslaufstelle A horizontal verschiebbar auf Querstreben 30 aufsitzen und ebenfalls hydraulisch oder mechanisch mittels Handrad 31 verschoben werden. Dies erlaubt sowohl das Zuführband 25 als auch das Wegführband 26 völlig gerade zu führen. Die dabei entstehende Auslenkung der Endlosketten 4 und 5 bereitet dabei aufgrund deren Gliederung keine Probleme.

**Patentansprüche**

1. Einrichtung zum Überkopf-Ausspülen (rinsen) von Flaschen u. dgl., mit einem kontinuierlich zwischen einer Einlaufstelle und einer Auslaufstelle umlaufenden Transportsystem zur klemmenden Mitnahme der Flaschen u. dgl. zu deren Überkopf-Vorbeiführung an einer Sprühvorrichtung für Wasser u. dgl., wobei das Transportsystem zwei synchron umlaufende Endlosketten umfasst, von welchen benachbarte, sich richtungsgleich bewegende Trums parallele Klemmbacken mit einstellbarem Abstand bilden und sich der durch die Endlosketten gebildete Transportweg nahe der Ein- bzw. Auslaufstelle wenigstens angenähert horizontal erstreckt, dadurch gekennzeichnet, dass die nahe der Einlaufstelle (E) bzw. Auslaufstelle (A) befindlichen vertikalen Wendebahnen des durch die Endlosketten (4, 5) gebildeten Transportweges durch eine sich horizontal erstreckende Rückführungsstrecke miteinander verbunden sind;

dass sowohl die Auslaufstelle (A) als auch die Einlaufstelle (E) für die Flaschen u. dgl. durch die Umkehrpunkte (44, 54 bzw. 43, 53) der beiden Endlosketten (4, 5) gebildet werden;

dass die Einlaufstelle (E) und die Auslaufstelle (A) des durch die Endlosketten (4, 5) gebildeten Transportsystems bezüglich des oberen oder unteren Transportweges in einer horizontalen Ebene oder in unterschiedlichen horizontalen Ebenen liegen;

dass die Einlaufstelle (E) und die Auslaufstelle (A) des durch die Endlosketten (4, 5) gebildeten Transportweges in einer gemeinsamen Vertikalebene liegen oder relativ zueinander seitlich versetzt sind;

dass die Sprühvorrichtung (20) an den Wendebahnen des durch die Endlosketten gebildeten Transportsystems innenseitig oder aussenseitig wirksam und der Abstand zwischen der Sprühvorrichtung (20) und der betreffenden Wendebahn verstellbar ist; und

dass für ein Verschieben der Einlaufstelle (E) seitlich relativ zur Auslaufstelle (A) die Abstützmittel (3) für die beiden Endlosketten (4, 5) an deren Ein- bzw. Auslaufstelle horizontal verschiebbar auf Querstreben (30) aufsitzen.

2. Einrichtung nach Anspruch 1, dadurch gekennzeichnet, dass für ein Verstellen der lichten Weite zwischen den Transporttrums (41, 51) der beiden Endlosketten (4, 5) deren Abstützmittel (3) querlaufende Gewindespindeln (8) zur Relativverschiebung der Abstützmittel (3) umfassen.

### Claims

1. A system for overhead handling (rinsing) of bottles and the like with a conveying system rotating continuously between a feed point and a discharge point having resilient clamping members for the clamping drive of the bottles and the like for moving them past a water or the like handling device in overhead manner, wherein the conveying system comprises two synchronously rotating endless chains having a conveying side and a return side in each case, the conveying sides moving in the same direction and forming parallel clamping jaws with anadjustable spacing, and in the vicinity of the feed-in or discharge point the conveying path formed by the endless chains extends at least approximately horizontally, characterized in that

the vertical truning paths of the conveying path formed by the endless chains (4, 5), near the fedd-in point (E) resp. discharge point (A) are connected by a reconducting line extending horizontally;

the discharge point (A) as well the fedd-in point (E) for the bottles or the like are formed by the reversal points (44, 54 resp. 43, 53) of the two endless chains (4, 5);

the feed-in point (E) and the discharge point (A) of the conveying system formed by the endless chains (4; 5) are located in the same or different planes with respect to thew upper or lower conveying path;

the feed-in point (E) and the discharge point (A) of the conveying path formed by the endless chains (4; 5) are located in the same or different planes or are displaced lateraly relative to each other;

the handling device (20) of the conveying system formed by the endless chains acts on the outer and/or inner vertical turning paths, and the distance between the handling device (20) and the respective turning path is adjustable; and

that for a displacing of the fedd-in point (E) laterally relative to the discharging point (A), the supporting means (3) for the two endless chains (4; 5) are positioned at their feed-in resp. discharge point horizontally adjustable on cross-struts (30).

2. A System as defined in claim 1, characterized in that the supporting means (3) for the relative displacement of the supporting means (3) for an adjusting of the inside with between the conveying sides (41; 51) of the two endless chains (4; 5).

### Revendications

1. Dispositif pour le traitement col en bas (rinçage) de bouteilles et analogues, avec un système de transport circulant continuellement entre un point d'entrée et un point de sortie pour l'entraînement en serrant de bouteilles ou analogues pour leur passage col en bas à un dispositif de pulvérisation d'eau ou analogue, où le système de transport comprend deux chaînes sans fin tournant en synchronisme, dont des tronçons voisins se déplaçant dans la même direction forment des mâchoires parallèles de serrage avec une distance réglable, et le chemin de transport formé par les chaînes sans fin s'étend au moins presqu'horizontalement à proximité des points d'entrée ou respectivement de sortie,

caractériseé en ce que les tournants verticaux se trouvant à proximité du point d'entrée (E) ou respectivement du point de sortie (A), du chemin de transport formé des chaînes sans fin, sont reliés par un tronçon de retour s'étendant horizontalement;

aussi bien le point de sortie (A) qu'également le point d'entrée (E) des bouteilles et analogues sont formés par les points de rebroussement (44, 54 ou respectivement 43, 53) des deux chaînes sans fin (4, 5);

en ce que le point d'entrée (E) et le point de sortie (A) du système de transport formé des chaînes sans fin (4, 5) se trouvent par rapport au chemin de transport supérieur ou inférieur, dans un plan horizontal ou dans différents plans horizontaux;

en ce que le point d'entré (E) et le point de sortie (A) du chemin de transport formé des chaînes (4, 5) se trouvent dans un plan vertical commun ou bien sont latéralement décalés l'un par rapport à l'autre;

en ce que le dispositif de pulvérisation (20) agit sur les tournants du système de transport formé des chaînes sans fin, vers l'intérieur ou vers l'extérieur, et la distance entre les dispositifs de pulvérisation (20) et le tournant correspondant est réglable; et

en ce que pour un déplacement du point d'entrée (E) latéralement par rapport au point de sortie (A), les moyens d'appui (3) des deux chaînes sans fin (4, 5) reposent sur des poutres transversales (30) de manière déplaçable horizontalement à leur point d'entrée ou respectivement de sortie.

2. Dispositif selon la revendication 1 caractérisé en ce que pour un ajustement de l'espace entre les tronçons de transport (41, 51) des deux chaînes sans fin (4, 5), leurs moyens d'appui (3) comprennent des broches filetées transversales (8) pour le déplacement relatif des moyens d'appui (3).

FIG. 1

0 047 263

FIG. 2

FIG. 3

FIG. 4